# EUROPEAN PATENT SPECIFICATION

(11) **EP 1 493 792 B1**
(45) Date of publication and mention of the grant of the patent: **03.01.2018**
(21) Application number: 04015388.4
(22) Date of filing: 30.06.2004
(51) Int. Cl.: C09J 123/08, C09J 123/20, C09J 191/06, C08L 23/08, C08L 91/06

(54) **HOT MELT ADHESIVE**
SCHMELZKLEBER
COLLE THERMOFUSIBLE

(30) Priority: 03.07.2003 US 613409
(43) Date of publication of application: 05.01.2005
(73) Proprietor: Henkel AG & Co. KGaA, 40589 Düsseldorf (DE)
(72) Inventor: Good, David J., Somerville, New Jersey 08876 (US); Mehaffy, Justin A., Hampton, New Jersey 08827 (US); Haner, Dale L., Ringwood, New Jersey 07456 (US); Patel, Jagruti, Branchburg, New Jersey 08876 (US); Morrison, Brian D., Lebanon, New Jersey 08833 (US); Willybiro, Fidelin N., Huntingdon Beach, California 92648 (US)

(56) References cited:
- EP-A- 0 934 990
- US-A- 4 956 207
- US-A1- 2002 146 526
- US-B1- 6 371 174

## Description

### FIELD OF THE INVENTION

The invention relates to a low application temperature hot melt adhesive compositions having high heat resistance. The adhesives are formulated for application at low temperatures and have high temperature performance.

### BACKGROUND OF THE INVENTION

Hot melt adhesives are applied to a substrate when molten, then placed in contact with a second substrate at which point the adhesive is cooled to harden the adhesive layer and form a bond. Hot melts are widely used for industrial adhesion applications, and are extensively used in product assembly and in packaging applications such as case sealing and carton closing operations.

Commercially available adhesives have until recently been applied at temperatures of 350°F (177°C) or greater in order to ensure complete melting of all the components and to achieve a satisfactory application viscosity.

For example US 4,956,207 disclosed hot melt adhesives comprising 25 to 50 percent of an isotactic thermoplastic polybutylene-1/ethylene copolymer containing 5.5 to 10 % ethylene, 20 to 60 % of a tackifier, 15 to 30 % of an amorphous diluent having a softening point of greater than 90 °C and optionally antioxidants and waxes or oils. These adhesives exhibit heat stress values of 46 °C and even 52 °C.

The need for such elevated temperatures increases operator risks with respect both to burns and to inhalation of residual volatiles and requires more energy, placing greater demands on the manufacturing facility. While recent developments have lead to hot melt adhesives that can be applied at temperatures down to about 121°C (250°F).

US 2002/0146526 discloses hot melt adhesives based on an ethylene n-butyl acrylate copolymer having a melt index of at least 900. As further ingredients of the adhesive a modified rosin, preferably phenol modified rosin, a wax and antioxidants were used. These adhesives can be used at application temperatures of down to 121 °C and exhibited a heat resistance when bonded of up to 60 °C, i.e. about 61 °C below the application temperature of the adhesive.

There still continues to be a need for low application temperature adhesives, including adhesives that can be applied at even lower temperatures, that provide added savings in terms of cost and convenience, both in the manufacture and use thereof, as well as performance improvements. The current invention fulfills this need.

### SUMMARY OF THE INVENTION

The invention provides improved hot melt adhesives that can be applied at temperatures of 149°C (300°F) or less, preferable temperatures of down to 93°C (200°F) or lower, and which perform well at high temperature and stress. The hot melt adhesives of the invention are formulated to withstand temperatures when bonded and stressed that are within within 56°C (100°F), more preferable within 50°C (90°F) of their application temperatures.

The invention provides a hot melt adhesive comprising a semicrystalline polymer, a wax and a tackifying resin. Mixtures of ethylene copolymers, in particular ethylene vinyl acetate and ethylene n-butyl acrylate, are preferred for use in the practice of the invention. Since the adhesives of the invention can be manufactured, reheated and applied to a chosen substrate at temperatures at or below 149°C (300°F), more typically and preferably below 121°C (250°F), even more preferably at 93°C (200°F), additives not heretofore contemplated for incorporation into hot melt adhesives may be included in the formulations of the invention. As such, various IR, UV and fluorescent dyes that are sensitive to thermal decomposition, thermoplastic microsphere encapsulants that are not stable at temperatures above, e.g., 121°C (250°F) may now be added to hot melts.

The invention also provides a method of sealing and/or making or forming a case, a carton, a tray, a box or a bag. The method comprises using a hot melt adhesive that is applied at or below 149°C (300°F) and wherein the bonded adhesive heat resistance and the adhesive application temperature are separated by 56°C (100°F) or less.

The invention further provides articles of manufacture comprising a hot melt adhesive that is applied at or below 149°C (300°F) and wherein the bonded adhesive heat stress value and the adhesive application temperature are separated by not more than 56°C (100°F). Preferred articles include cartons, cases, trays, bags and like packaging articles used for packaging products that are formed and/or sealed using a hot melt adhesive. The packaging article may comprise cardboard or paperboard that has been adhered by such hot melt adhesives. If desired the adhesive may be pre-applied to the article, e.g., carton, case, tray or bag during the manufacture thereof, and reactivated prior to packaging of a product. Other articles include, but are not limited to, casemaking and nonwoven (e.g., diapers) applications. The invention still further provides a use of a carton, case, tray or bag, for packaging food or an alcoholic beverage, wherein the carton, case, tray or bag comprises a hot melt adhesive that is applied at or below 149°C (300°F) and wherein the bonded adhesive heat resistance and the adhesive application temperature are separated by 56°C (100°F) or less.

Another aspect of the invention is directed to the use of the hot melt adhesive for bonding a first substrate to a similar or dissimilar second substrate using the hot melt adhesives of the invention. The use comprises applying to at least a first substrate a molten hot melt adhesive composition, bringing a second substrate in contact with the adhesive present on the first substrate, whereby the first substrate is bonded to the second substrate. In one embodiment, the molten adhesive is applied (i.e., pre-applied) to the first substrate and allowed to solidify. The adhesive is then reactivated, either before or following, the step of bringing the second substrate in contact with the adhesive present on the first substrate. The substrates to be bonded together may be the same or different (i.e., dissimilar). In one preferred embodiment, the substrates to be bonded together are cellulosic substrates.

Due to the low temperatures that can be used in the preparation and the application of the adhesives of the invention, methods of manufacturing adhesives not heretofore available to the art are enabled and provide by the invention. The invention thus provides a method of manufacturing which utilizes energy efficient and low cost mix and storage facilities historically inadequate for blending or distributing hot melt adhesives and comprises heating adhesive components at a temperature below 121°C (250°F) to form a homogenous adhesive blend. Low pressure (<138 kPa (<20 psig) saturated steam) steam jacketed vessels, for example would be insufficient for melt blending of conventional 177°C (350°F) applied adhesives due to their high melt point, high viscosity at low temperatures, and impractical mix times required at temperatures achieved by the steam. The low melt temperature and low viscosity also makes feasible efficient and expeditious inline mixing methods. Inline static and dynamic or recirculatory mixing can now be employed to achieve homogeneous adhesive blends. Cost effective and efficient molten transport, such as those employed in the manufacture and transport of confection, previously incapable of being utilized in the manufacture and distribution of adhesives of prior art, may be employed with the adhesives disclosed herein.

### BRIEF DESCRIPTION OF THE DRAWING FIGURES

Figures 1 illustrates a crystallization profile of an adhesive of the invention.
Figures 2A and 2B are side views showing placement of the adhesive bead and other dimensional parameters used to measure the heat resistance of an adhesive bond.
Figure 3 compares an adhesive of the invention (-▲-▲-▲-·) to a prior art hot melt adhesive (-■-■-■-·).

### DETAILED DESCRIPTION OF THE INVENTION

All documents cited herein are incorporated in their entireties by reference.

Hot melt adhesives that are able to achieve high heat resistance in conjunction with having low application temperatures have been discovered. Bonds formed with the hot melt adhesive of the invention are able to withstand high stress at temperatures within 56°C (100°F), more preferable within 50°C (90°F) of their application temperature. In addition to high heat resistance, the hot melt adhesives of the invention maintain the ability to adhere at or below room temperature. These hot melt adhesives are ideally suited for use in case, carton or tray formation.

The invention is directed to a low application temperature, high heat resistant hot melt adhesive typically comprising a semicrystalline polymer, a wax and a tackifying resin. The adhesive of the invention may be used in automated assembly applications, such as but not limited to carton, case or tray formation where the adhesive is applied from large bulk industrial melting systems where assemblies speeds can reach hundreds of units per minute.

The invention encompasses a new class of hot melt adhesives that can be applied at temperatures of 149°C (300°F) or below and that exhibit substantially improved bond performance at high temperatures and stresses. The adhesives of the invention are formulated to withstand stress at temperatures substantially closer to the temperature of the adhesive's application then heretofore achieved in the art. In contrast to previously known conventional (177°C (350°F) and above) and low application temperature adhesives, resistance to high temperatures and stresses is much closer to the application temperature of the adhesive of the invention.

The high temperature performance of the adhesives of the invention is unexpected since, as a hot melt adhesive approaches its low application temperature, it will begin to melt. The adhesives of the invention have a narrow temperature range (56°C (100°F) or less) between the application temperature of the adhesive and the bonded adhesive heat resistance, yet exhibits adhesion, machining characteristics and cost properties typical of prior art hot melt adhesives currently in commercially use.

The type of components used to prepare adhesives of the invention can vary significantly in chemical and physical properties. These components are, however, selected to formulate adhesives (1) that have a viscosity appropriate for application of the adhesive to a substrate of choice, typically less than about 2,000 cps (i.e., a viscosity allowing adhesive machining and penetration or wetting of the substrate by the adhesive); (2) that exhibit failure of a stressed bond only at temperatures within about 56°C (100°F) of the application temperature; (3) wherein the molten to solid crystallization of the adhesive occurs some time shortly the substrates have been contacted by the hot melt adhesive; and (4) adhesion of materials occurs at about room temperature.

### Application Temperature

Application temperature is determined largely by machining requirements and the substrates targeted for bonding. The automated equipment utilized in dispensing hot melt adhesives is typically limited by the pumping action. Typical viscosities for case and carton sealing is desirable less than 2,000 mPa·s (centipoise (cps)) and the majority of commercially employed hot melt application equipment favors a viscosity of below about 1,500 mPa·s (cps). Using an adhesive having a higher viscosity typically leads to stringing of the adhesive from the nozzles and improper amount or control of adhesive transfer to the substrates. In addition, higher viscosity adhesives will typically reduce the life of dispensing parts and lead to increased machine maintenance. Further, porous packaging substrates, such as those composed of cellulose, are less susceptible to wetting by a high viscosity adhesive because of decreased diffusion under compression. As described herein, application temperature means the temperature, to nearest 13.9 °C (25°F) increment, that the adhesive viscosity falls between about 800 mPa·s (cps) and 1500 mPa·s (cps).

### Heat Resistance

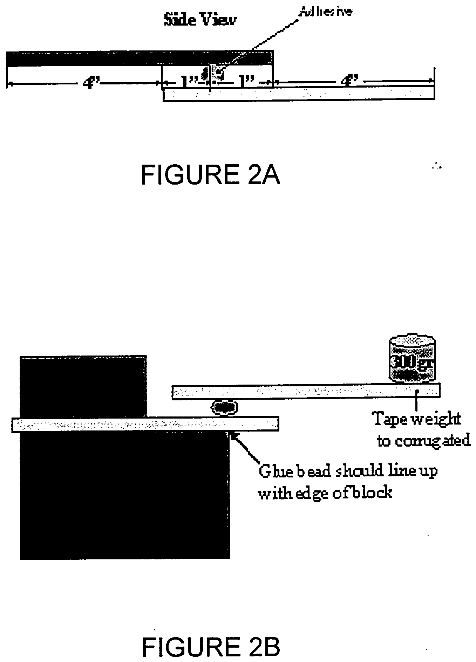

Heat resistance is defined herein as being the temperature at which a stressed bond fails. The heat resistance of a bond may be determined as described below and with reference to Figures 2A and 2B. In summary, the temperature of failure for a stressed bond is determined by bonding two corrugated substrates together, stressing the bond with a three hundred gram weight then placing in an oven for 24 hours, after which the bond is examined to see if it is still intact.

The corrugated substrates used are double fluted. Referring to Figure 2A, an adhesive bead is applied to the substrate such that the flutes run in a direction perpendicular to the direction of the adhesive bead. The adhesive bead is positioned 2.54 cm (one inch) from the front edge of the bottom substrate and 12.7 cm (five inches) from the front edge of the top substrate. Bead width on the substrate is 2 mm (eight hundredths of an inch) wide prior to compression. A 5.08 cm (two inch) bond width is present following compression of the adhesive bead between the top and bottom substrate with a two hundred gram weight.

As shown in Figure 2B, a three hundred gram weight is fixed to the front edge of the top substrate. A brace is then used to create a fulcrum point directly under the adhesive bead. The braced bond with weight is then place in an oven set at 56°C (100°F) below the application temperature of the adhesive. The bond is left in the oven for twenty-four hours and then examined to determine if the bond is still intact. A bond that remains intact is recorded as a passing result for the temperature of the test. Bonds that pass this test are repeated and subject to higher temperatures until they produce a failure. The highest temperature that a bond passes is recorded as the heat resistance of that adhesive.

### Open Time and Crystallization

The timing of crystallization between the molten and solid states is critical to the speed at which the bond sets to an appropriate strength required to hold the substrates together. Rapid solidification only after contact with the substrates allows fast adhesive application leading to high-speed production of bonded materials.

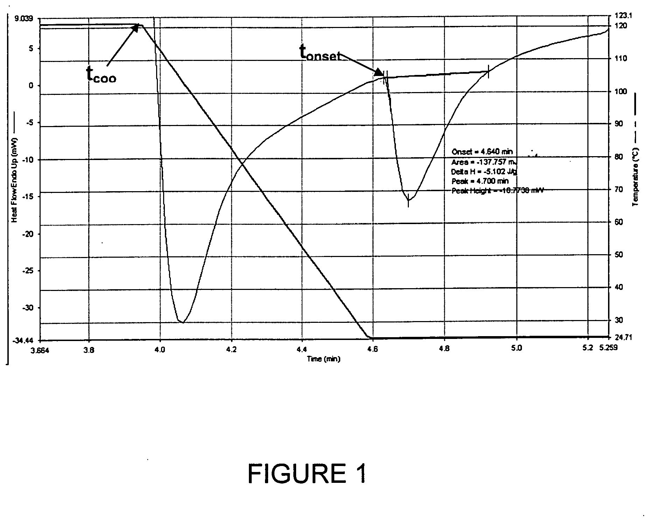

The method used to characterize adhesives crystallization kinetics involves quench cooling with a differential scanning calorimeter (DSC). The DSC records the thermodynamic changes in an adhesive sample during the heating or cooling process. Cooling an adhesive from application temperature to room temperature at a rate of 150°C/min via DSC creates a record of the crystallization kinetics. Analysis of the crystallization time from this DSC method correlates to a hot melt adhesive's time to form an adequate bond in various adhesion applications. The sample size used for this analysis is 15-25 mg. Crystallization time (dt_{cryst}) is calculated by subtracting the time that the DSC cell cooling begins (t_{cool}) from the time that adhesive crystallization begins (tₒₙₛₑₜ). Adhesives of the invention that exhibit a crystallization time of 0.35 minutes or longer by the method detailed above are particularly desirable. See Figure 1, which shows the crystallization profile of an adhesive of the invention.

Referring to Figure 1, the linear curve is the temperature of the adhesive sample and the nonlinear curve is the thermodynamic data recorded by the DSC. Figure 1 graphs sample temperature and heat flow in DSC test using a 150°C/min cooling rate. For this sample the t_{cool}=3.96min and tₒₙₛₑₜ=4.64min yielding a t_{cryst}=0.68min. In the sample tested and shown in Figure 1, the adhesive crystallization peak does not occur until after the adhesive has reached room temperature which is 0.68 minutes after the adhesive started to cool from the application temperature.

The value in having a hot melt adhesive that crystallizes after 0.35 minutes is that the bond has adequate time to be formed and the adhesive adequate time to penetrate the substrate before the solidification and setting of the bond occurs. Adhesives that crystallize before 0.35 minutes in the DSC method detailed above do not have adequate time to penetrate the substrates targeted for bonding leading to poor adhesion.

### Adhesive Composition

Adhesives encompassed by the invention are any adhesive in which the bonded adhesive heat resistance and the adhesive application temperature are separated by 56°C (100°F) or less and the adhesive is applied at or below 149°C (300°F). Preferable the bonded adhesive heat resistance and the adhesive application temperature are separated by 50°C (90°F) or less. Preferably, the application temperature of the adhesive is 121°C (250°F) or less. Even more preferred is application of the adhesive at a temperature of about 93°C (200°F). Whether or not the bonded adhesive heat resistance and the adhesive application temperature are separated by 56°C (100°F) or less can be easily determined by the skilled practitioner using the methods and calculations described herein.

In addition to the required differential in the bonded adhesive heat resistance and the adhesive application temperature, the crystallization of the formulation when analyzed by DSC from application temperature to room temperature at a cooling rate of 150°C/min preferably yields a time between initial cooling and crystallization of 0.35 minutes or greater. Preferred adhesives will achieve adhesion at room temperature.

Especially preferred embodiments of the hot melt adhesive of the invention will be thermally stable at application temperatures for a period of seventy-two hours as indicated by a viscosity change within +/- 10% of the original application viscosity.

A description of adhesives components that can be formulated in accordance with the invention and examples of formulations of the invention follow. It is, however, recognized that the skilled artisan can formulate these and other components in various amounts and test such formulations for the performance properties described and taught herein in order to prepare other formulations encompassed by the invention.

### i. Polymer component

The adhesives of the invention comprise at least one ethylene polymer, and may comprise a blend of two or more polymers. The term ethylene polymer, as used herein, refers to homopolymers, copolymers and terpolymers of ethylene. Preferred are copolymers of ethylene with one or more polar monomers, such as vinyl acetate or other vinyl esters of monocarboxylic acids, or acrylic or methacrylic acid or their esters with methanol, ethanol or other alcohols. Included are ethylene vinyl acetate, ethylene methyl acrylate, ethylene n-butyl acrylate, ethylene acrylic acid, ethylene methacrylate, ethylene 2-ethylhexylacrylate, ethylene octene and mixtures and blends thereof. Mixtures of ethylene n-butyl acrylate and ethylene vinyl acetate are particularly preferred.

Other polymers that find utility in this invention include homopolymers or copolymers of propylene, octene, hexene, heptene, butene, and ethylene monomers. Preferably these polymers are synthesized by single site catalysis. Metallocene is one example of a single site catalyst suitable for synthesis of polymers utilized in this invention.

Dow Chemical sells commercial metallocene catalyzed polymers under the trade name Insight.

Particularly preferred adhesives comprise an ethylene n-butyl acrylate copolymer containing up to 45% by weight, typically 15 to 35% of n-butyl acrylate and has a melt index of at least 300. Ethylene n-butyl acrylate copolymers are available from Elf Atochem North America, Philadelphia, PA under the tradename Lotryl®, from Exxon Chemical Co. under the tradename Enable® (e.g., EN33330 which has a melt index of about 330 grams/10 minutes and an n-butyl acrylate content of about 33% by weight in the copolymer and EN33900 which has a melt index of about 900 and an n-butyl acrylate content of about 35% by weight) and from Millennium Petrochemicals under the tradename Enathene® (e.g., EA 89822 which has a melt index of about 400 grams/10 minutes and a n-butyl acrylate content of about 35% by weight in the copolymer).

Ethylene vinyl acetate polymers that may be used in the practice of the invention will generally have a MI of at least 300 grams/10 minutes and having a vinyl acetate content of from 10 to 45 % by weight, as well as blends thereof. Ethylene vinyl acetate copolymers are available from DuPont Chemical Co., Wilmington, DE under the tradename Elvax® (e.g., Elvax® 205W, which has a melt index of 800 and a vinyl acetate content of about 28% by weight in the copolymer). Other ethylene vinyl acetate copolymers are available from Exxon Chemical Co. under the tradename Escorene® (e.g., UL 7505) and also from Millennium Petrochemicals, Rolling Meadows, IL, under the tradename Ultrathene® (e.g., UE 64904) and AT® copolymers available from AT Polymers & Film Co., Charlotte, NC (e.g., AT® 1850M) and Evatane® from Atofina Chemicals, Philadelphia, PA.

The polymer component will usually be present in an amount of from 10 wt % to 60 wt %, more preferably from 20 wt % to 40 wt %, even more preferably from 25 wt % to 35 wt %.

### ii. Tackifying component

The adhesive compositions of this invention are tackified. The tackifier component is present in an amount of from 10 wt % to 60 wt %, more preferably from 25 wt % to 45 wt %, even more preferably from 30
wt % to 40 wt %. The tackifying resins typically will have Ring and Ball softening points, as determined by ASTM method E28, between 70°C and 150°C, more preferably between 90°C and 120°C, and most preferably between 95°C and 110°C. Mixtures of two or more of the below described tackifying resins may be required for some formulations.

Useful tackifying resins may include any compatible resin or mixtures thereof such as natural and modified rosins including, for example, as gum rosin, wood rosin, tall oil rosin, distilled rosin, hydrogenated rosin, dimerized rosin, resinates, and polymerized rosin; glycerol and pentaerythritol esters of natural and modified rosins, including, for example as the glycerol ester of pale, wood rosin, the glycerol ester of hydrogenated rosin, the glycerol ester of polymerized rosin, the pentaerythritol ester of hydrogenated rosin, and the phenolic-modified pentaerythritol ester of rosin; copolymers and terpolymers of natured terpenes, including, for example, styrene/terpene and alpha methyl styrene/terpene; polyterpene resins having a softening point, as determined by ASTM method E28-58T, of from 70°C to 150°C; phenolic modified terpene resins and hydrogenated derivatives thereof including, for example, the resin product resulting from the condensation, in an acidic medium, of a bicyclic terpene and a phenol; aliphatic petroleum hydrocarbon resins having a Ball and Ring softening point of from 70°C to 135°C; aromatic petroleum hydrocarbon resins and the hydrogenated derivatives thereof; and alicyclic petroleum hydrocarbon resins and the hydrogenated derivatives thereof. Also included are the cyclic or acyclic C₅ resins and aromatic modified acyclic or cyclic resins. Examples of commercially available rosins and rosin derivatives that could be used to practice the invention include SYLVALITE RE 110L, SYLVARES RE 115, and SYLVARES RE 104 available from Arizona Chemical; Dertocal 140 from DRT; Limed Rosin No.1,GB-120, and Pencel C from Arakawa Chemical.

Preferred tackifiers are synthetic hydrocarbon resins. Non-limiting examples include aliphatic olefin derived resins such as those available from Goodyear under the Wingtace tradename and the Escoree 1300 series from Exxon. A common C₅ tackifying resin in this class is a diene-olefin copolymer of piperylene and 2-methyl-2-butene having a softening point of about 95°C. This resin is available commercially under the tradename Wingtack 95. Most preferable are aromatic hydrocarbon resins that are C₉ aromatic/aliphatic olefin-derived and available from Startomer and Cray Valley under the trade name Norsolene and from Rutgers series of TK aromatic hydrocarbon resins. Norsolene M1090 is a low molecular weight thermoplastic hydrocarbon polymer derived largely from alpha-pinene which has a ring and ball softening point of 95-105°C and is commercially available from Cray Valley. These C9 based hydrocarbon resins are particularly useful when synthesized with an alpha-pinene, styrene, terpene, alpha-methylstyrene, and/or vinyl toluene, and polymers, copolymers and terpolymers thereof, terpenes, terpene phenolics, modified terpenes, and combinations thereof. The increased aromatic structure of these resins produces more polar character in the resins that contributes toward the desired compatibility and performance of the adhesives of this invention.

Small quantities of alkyl phenolic tackifiers can be blended with additional tackifier agents detailed above to improve the high temperature performance of these adhesives. Alkyl phenolics added in less than 20 wt % of the total formulation are compatible and in the proper combination increase high temperature adhesive performance. Alkyl phenolics are commercially available from Arakawa Chemical under the Tamanol tradename and in several product lines from Schenectady International.

### iii. Wax component

Waxes suitable for use in the present invention include paraffin waxes, microcrystalline waxes, polyethylene waxes, polypropylene waxes, by-product polyethylene waxes, Fischer-Tropsch waxes, oxidized Fischer-Tropsch waxes and functionalized waxes such as hydroxy stearamide waxes and fatty amide waxes. It is common in the art to use the terminology synthetic high melting point waxes to include high density low molecular weight polyethylene waxes, by-product polyethylene waxes and Fischer-Tropsch waxes. Modified waxes, such as vinyl acetate modified, maleic anhydride modified, and oxidized waxes may also be used.

Paraffin waxes that can be used in the practice of the invention include Okerin® 236 TP available from Astor Wax Corporation, Doraville, GA.; Penreco® 4913 available from Pennzoil Products Co., Houston, TX.; R-7152 Paraffin Wax available from Moore & Munger, Shelton, CN.; and Paraffin Wax 1297 available from International Waxes, Ltd. in Ontario, Canada, Pacemaker available from Citgo, and R-2540 available from Moore and Munger; and other paraffinic waxes such as those available from CP Hall under the product designations 1230, 1236, 1240, 1245, 1246, 1255, 1260, & 1262. CP Hall 1246 paraffinic wax is available from CP Hall (Stow, Ohio).

Wax will typically be present in the formulations of the invention in amounts of from 10 to 60 wt %, more preferable from 25 to 45 wt %, and even more preferable from 30 to 40 wt %. Preferred waxes have a melt temperature between 49°C (120°F) and 93°C (200°F), more preferably between 54°C (130°F) and 77°C (170°F), and most preferable between 63°C (145°F) and 74°C (165°F).

### iv. Other optional and/or desirable components

Adhesives of the invention may optionally and preferably also comprise other components including but not limited to functional additives. Functional additives are defined herein as being components that add a specific physical or chemical property that impact the characteristics in manufacturing or use, not related to the adhesion character, which are easier to incorporate or retain in low temperature adhesives. Such functional additives may exert an effect on the environment. Examples of such functional components include biocides, therma-chromic materials (e.g., as tamper evidence or temperature sensor), anti-counterfeit tags, fragrances, freshness enhancers (e.g., O₂ scavengers, anti-bacterials, pest repellent, spoilage detection, low temperature encapsulants (e.g., thermoplastic microspheres that would not be stable at temperatures above 121°C (250°F)). Other compounds could be added that also do not affect physical properties are pigments which add color, or fluorescing agents, to mention only a couple. Additives like these are known to those skilled in the art. Depending on the contemplated end uses of the adhesives, other additives such as plasticizers, pigments and dyestuffs conventionally added to hot melt adhesives might be included. In addition, small amounts of additional tackifiers and/or waxes such as microcrystalline waxes, hydrogenated castor oil and vinyl
acetate modified synthetic waxes may also be incorporated in minor amounts, i.e., up to 10 percent by weight, into the formulations of the present invention.

Due to the low application temperature and adhesion at room temperatures, the adhesives of the invention are particularly useful in the formulation of fragranced adhesives. Effective perfuming of the hot melts of the invention is possible. The fragranced material is added to the hot melt adhesives of the invention and is capable of remaining stable in the adhesives prior to and after use without significant loss of fragrance. The term effective perfuming means the fragrance remains stable during production of the adhesive, during storage of the adhesive prior to use and is still available for delivery after the adhesive has been used. By delivery means the scent evolves from the adhesive into the environment proximate to the adhesive. By stable is meant that the fragrance remains noticeable following manufacture of the adhesive, following storage of the adhesive, following manufacture of an article formed using the adhesive, during storage of the manufactured article and during use of the manufactured article by the end user. The terms fragranced and scented are used in their ordinary sense to refer to and include any fragrant substance or mixture of substances including natural (i.e., obtained by extraction of flower, herb, blossom or plant), artificial (i.e., mixture of natural oils or oil constituents) and synthetically produced substance and odoriferous compounds.

In most cases fragrance compositions are formulated to have a fragrance generally considered at least inoffensive and preferably pleasing to intended users of the composition or user of the article prepared with the adhesive. Fragrance compositions may also be used for imparting a desired odor to the skin and/or any product for which an agreeable odor is indispensable or desirable. Fragrance compositions are also used in products that would normally have an unattractive or offensive odor to mask the odor and produce an odor that is less unattractive or offensive. The (pleasing) fragrance characteristics may be the main function of the product in which the fragrance composition has been incorporated or may be ancillary to the main function of the product.

Fragrances that can be added to the hot melt adhesive of the invention are preferably selected to have a closed cup flash point of greater than 38°C (100°F), preferably greater than 93°C (200°F). Fragrant materials, including modifications and compositions thereof, e.g., a modified essential oil composition, may be tested for closed cup flash point determined in accordance with ASTM method D93-00 (Flash Point by Pensky-Martens Closed Cup Tester).

The adhesives of the present invention will preferably contain a stabilizer or antioxidant. These compounds are added to protect the adhesive from degradation caused by reaction with oxygen induced by such things as heat, light, or residual catalyst from the raw materials such as the tackifying resin.

Among the applicable stabilizers or antioxidants included herein are high molecular weight hindered phenols and multifunctional phenols such as sulfur and phosphorous-containing phenol. Hindered phenols are well known to those skilled in the art and may be characterized as phenolic compounds which also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency, and correspondingly, its reactivity; this hindrance thus providing the phenolic compound with its stabilizing properties. Representative hindered phenols include; 1,3,5-trimethyl-2,4,6-tris-(3,5-di-tert-butyl-4-hydroxybenzyl)-benzene; pentaerythrityl tetrakis-3(3,5-di-tert-butyl-4-hydroxyphenyl)-propionate; n-octadecyl-3(3,5-di-tert-butyl-4-hydroxyphenyl)-propionate; 4,4'-methylenebis (2,6-tert-butyl-phenol); 4,4'-thiobis (6-tert-butyl-o-cresol); 2,6-di-tertbutylphenol; 6-(4-hydroxyphenoxy)-2,4-bis(n-octyl-thio)-1,3,5 triazine; di-n-octylthio)ethyl 3,5-di-tert-butyl-4-hydroxy-benzoate; and sorbitol hexa[3-(3,5-di-tert-butyl-4-hydroxy-phenyl)-propionate].

Utilizing, in conjunction therewith, known synergists such as, for example, thiodipropionate esters and phosphites may further enhance the performance of these antioxidants. Distearylthiodipropionate is particularly useful. These stabilizers, if used, are generally present in amounts of 0.1 to 1.5 weight percent, preferably 0.25 to 1.0 weight percent.

Such antioxidants are commercially available from Ciba-Geigy, Hawthorne, NY and include Irganox® 565, 1010 and 1076 which are hindered phenols. These are primary antioxidants that act as radical scavengers and may be used alone or in combination with other antioxidants such as phosphite antioxidants like Irgafos® 168 available from Ciba-Geigy. Phosphite catalysts are considered secondary catalysts and are not generally used alone. These are primarily used as peroxide decomposers. Other available catalysts are Cyanox® LTDP available from Cytec Industries in Stamford, CN., and Ethanox® 1330 available from Albemarle Corp. in Baton Rouge, LA. Many such antioxidants are available either to be used alone or in combination with other such antioxidants. These compounds are added to the hot melts in small amounts and have no effect on other physical properties.

### v. Components for reactivation of pre-applied adhesive

The adhesives of the invention may be pre-applied to a substrate and later reactivated. Since reactivation can be accomplished at lower temperatures for adhesives of this invention, less energy is required in the reactivation process independent of the reactivation method utilized. The ability to reactivate using less energy enables these adhesives to be run at faster production speeds or require less room for reactivation on a production line.

In one embodiment of the invention, adhesive is preapplied to a substrate, allowed to solidify and then, later, reactivated using, e.g., conventional heat seal applications. In a preferred embodiment, the adhesive of the invention is formulated for purpose of pre-application/reactivation. Preferred re-activatable adhesives for pre-application to a substrate comprises an energy-absorbing ingredient. Pigments and dyes are particularly preferred energy absorbing ingredients, near infrared absorbing dyes and pigments being particularly preferred.

Energy absorbing ingredients for use in the practice of the invention will typically have an absorption in the range of from 750nm to 5000nm. Energy-absorbing ingredients include those dyes, pigments, fillers, polymers and resins or other ingredients that are capable of absorbing energy and that provide an optimal balance of absorption, reflection, transmission and conduction. Pigments and dyes are particularly preferred energy absorbing ingredients, with near infrared absorbing dyes and pigments being particularly preferred.

Preferred energy-absorbing ingredients for use in the practice of the invention are broad band near IR absorbers such as Epolight 1125 (Epolene, Inc), SDA6248 (H.W. Sands Corp.), SDA2072 (H.W. Sands Corp.) and carbon black. Carbon black can be purchased from Cabot under trade name of Monarch, Regal, Black Pearl, and Elftex, or Degussa (FW series), or from Columbian Chemical Company (Raven Series). Carbon black can be manufactured by different methods such as the furnace black method, the gas (channel) black method, and the lamp black method. The key parameters affecting the radian energy absorption of carbon black prepared by these various methods are average primary particle size, surface chemistry and aggregate structure. The adhesives of the invention reactivate on exposure to short durations of radiant energy providing superior on-line performance and set speed that allows for quicker production speeds.

Ways of reactivating adhesives of the invention include, but are not limited to heat, hot air, steam, ultrasonic, e-beam, radio frequency, and microwave.

### Use and utility

The adhesive compositions of the present invention are prepared by blending the components in the melt at a temperature of above 90°C, typically at about 110°C, until a homogeneous blend is obtained, usually about two hours is sufficient. Various methods of blending are known in the art and any method that produces a homogeneous blend is satisfactory.

The hot melt adhesives of the invention find use in, for example, packaging, converting, bookbinding, bag ending and in the non-wovens markets. The adhesives find particular use as case, carton, and tray forming, and as sealing adhesives, including heat sealing applications, for example in the packaging of cereals, cracker and beer products.

Encompassed by the invention are containers, e.g., cartons, cases, boxes, bags, trays. Hot melt adhesives for packaging are generally extruded in bead form onto a substrate using piston pump or gear pump extrusion equipment. Hot melt application equipment is available from several suppliers including Nordson, ITIN and Slautterback.

Wheel applicators are also commonly used for applying hot melt adhesives, but are used less frequently than extrusion equipment. Alternatively the adhesive may be applied by the packaging converter prior to shipment to the packager, i.e., the container comprises a pre-applied adhesive. Following the packaging of the container, the container may be heat sealed by conventional means or subjected to any alternative source of energy that heats the adhesive to proper bonding temperatures. The low temperature adhesives of this invention are particularly suitable for these applications because they require less energy to reactive or reheat to the proper temperatures for bond formation. In preferred embodiments, the adhesive to be pre-applied comprises an energy absorbing ingredient.

Substrates to be bonded include virgin and recycled kraft, high and low density kraft, chipboard and various types of treated and coated kraft and chipboard. Composite materials are also used for packaging applications such as for the packaging of alcoholic beverages. These composite materials may include chipboard laminated to an aluminum foil that is further laminated to film materials such as polyethylene, Mylar, polypropylene, polyvinylidene chloride, ethylene vinyl acetate and various other types of films. Additionally, these film materials also may be bonded directly to chipboard or Kraft. The aforementioned substrates by no means represent an exhaustive list, as a tremendous variety of substrates, especially composite materials, find utility in the packaging industry.

### Process Equipment

Due to the low temperatures required to manufacture and use the adhesives of the invention, increased productivity and a reduction in the cost of manufacture and distribution is obtained. This is particularly true of adhesives with application temperatures targeted for 93°C (200°F) and lower. These adhesives open new possibilities in the field of hot melt production that did not exist for adhesives applied above 149°C (300°F). Some of these manufacturing possibilities are further discussed in detail below.

A 103-172 kPa (15-25 psig) steam jacketed vessel may be employed in the manufacture of hot melt adhesives of this invention, providing uniquely stable adhesives without the heat history and deleterious impact of current high temperature mixing techniques. These mixing procedures further allow for the incorporation of heat sensitive materials (e.g., low boiling point or thermally reactive materials).

Continuous flow mixing techniques wherein the adhesive components are pumped in either molten, pre-melted or slurry form through dynamic mixing zones leads to the elimination of batch cycle time and a large increase of mixing efficiency. Preferably these continuous flow mixing techniques utilize a network of steam jacketed or low temperature electrical impedance heated piping to pump and mix the raw materials.

These same systems, due to the minimal heat and electrical requirements, may also be employed in compact, low cost apparatus for molten distribution, delivery and application of the adhesives of the current invention.

The invention thus provides methods for manufacturing, delivering and/or applying hot melt adhesives formulated in accordance with the invention. Means to apply these adhesives will typically operate at temperatures of less than 121°C (250°F), more typically at maximum temperatures of less than 107°C (225°F). Heating means can now include low pressure steam (less than about 172 kPa (25psi)) or hot water. Moreover, heated IBC (insulated bulk container) or other transit container may be used as the primary vessel for mixing or a continuous flow mixing process can be used to obtain a homogenous blend, as well as storing, distributing and/or delivering adhesives formulated for application at lower temperatures.

### EXAMPLES

In the following examples, which are provided for illustrative purposes only, all parts are by weight and all temperatures in degrees Fahrenheit unless otherwise noted. Heat stress is determined by the method detailed above and illustrated in Figures 2A and B. In these examples, the word "delta" is used to describe the number of degrees in Fahrenheit between the hot melt adhesives application temperature and that adhesives highest heat resistance as determined by the test described above.

### Example 1

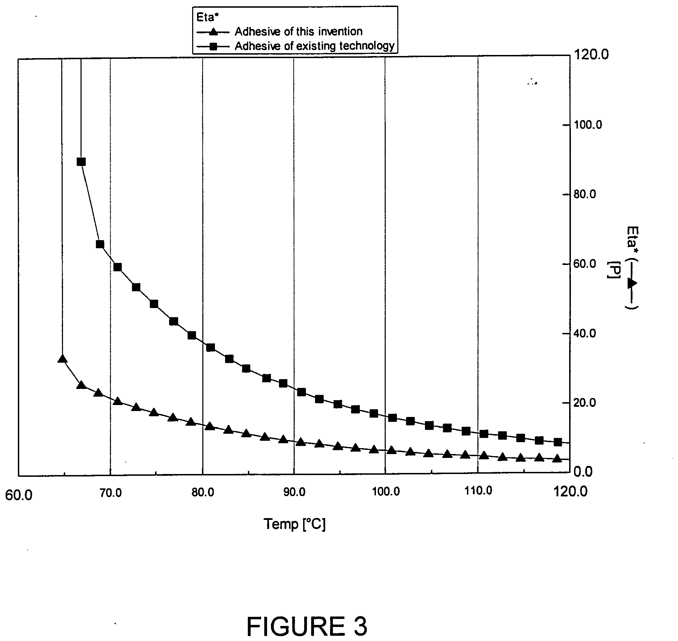

An adhesive of the invention was compared to the prior hot melt technology. Figure 3 is a rheology trace of these two adhesives. Eta* refers to the viscosity of the adhesives and is shown as a function of temperature. The -■-■-■- curve represents an adhesive of prior technology (National Starch 34-250A) and the -▲-▲-▲- curve is an adhesive of this invention (Table, Sample 2).

Both of these adhesives have equal heat resistance at 43°C (110°F) given by the test described above however the adhesive of this invention (-▲-▲-▲-) has a significantly lower viscosity above its melt temperature. The melting temperature corresponds to the vertical segment of the curves where the viscosity is decreasing rapidly with small temperature increases. This lower viscosity just above the melt temperature allows for the adhesive of this invention to be applied at 93°C (200°F) while the adhesive of prior art must be applied at least at 121°C (250°F) or greater. The difference between application temperature and heat resistance is significantly narrower for adhesive of the invention than the prior art hot melt with delta values of 47°C (85°F) and 78°C (140°F) respectively.

### Example 2

Adhesive samples were prepared in a single blade mixer and heated until components yield a homogeneous mixture.

Adhesive formulations (Samples 1-10) of the invention were prepared by blending wax (35 wt. % Pacemaker 53), ethylene copolymers (20 wt. % Enable EN 33900 and 10 wt. % Escorene XX-65.12) and the components shown in Table 1 at temperatures of 200°F under low shear. Results are show in Table 2. As can be seen in Table 2 the adhesives of the invention have delta values less than 56°C (100°F) with full adhesion.

**Table 1**

| | Sample | | | | | | | | | |
|---|---|---|---|---|---|---|---|---|---|---|
| Material | 1 | 2 | 3 | 4 | 5 | 6 | 7 | 8 | 9 | 10 |
| Norsolene M-1090 | 35 | 25 | - | - | 20 | 25 | - | 25 | 25 | - |
| TK-110H | - | - | 35 | 25 | 15 | - | 25 | - | - | - |
| Sylvalite RE 110L | - | 10 | - | 10 | - | - | - | - | - | - |
| Limed Resin No.1 | - | - | - | - | - | 10 | - | - | - | - |
| Dertocal 140 | - | - | - | - | - | - | 10 | - | - | - |
| Zincogral Zn 9 | - | - | - | - | - | - | - | 10 | - | - |
| Tamanol 521 | - | - | - | - | - | - | - | - | 10 | - |
| GB-120 | - | - | - | - | - | - | - | - | - | 35 |

**Table 2**

| | Viscosity @ 93°C (mPa.s) (200°F(cps)) | Adhesion to paper board | Application Temperature | Heat Resistance | delta |
|---|---|---|---|---|---|
| Sample 1 | 1165 | full | 93°C (200°F) | 43°C (110°F) | 50°C (90°F) |
| Sample 2 | 1210 | full | 93°C (200°F) | 46°C (115°F) | 47°C (85°F) |
| Sample 3 | 1130 | full | 93°C (200°F) | 43°C (110°F) | 50°C (90°F) |
| Sample 4 | 1175 | full | 93°C (200°F) | 43°C (110°F) | 50°C (90°F) |
| Sample 5 | 1160 | full | 93°C (200°F) | 43°C (110°F) | 50°C (90°F) |
| Sample 6 | 1255 | full | 93°C (200°F) | 52°C (125°F) | 41°C (75°F) |
| Sample 7 | 1230 | full | 93°C (200°F) | 49°C (120°F) | 47°C (85°F) |
| Sample 8 | 1265 | full | 93°C (200°F) | 46°C (115°F) | 47°C (85°F) |
| Sample 9 | 1225 | full | 93°C (200°F) | 54°C (130°F) | 39°C (70°F) |
| Sample 10 | 1500 | full | 93°C (200°F) | 52°C (125°F) | 41°C (75°F) |

### Example 3

Adhesive formulations of the invention (Samples 11-13) were prepared by blending wax (35 wt. % Pacemaker 53), tackifier (35 wt. % Rutgers TK110H) and the components shown in Table 3 at temperatures of 93°C (200°F) under low shear. Results are show in Table 4. As can be seen in Table 4 the adhesives of the invention have delta values less than 56°C (100°F) with full adhesion.

**Table 3**

| | | | | Sample | |
|---|---|---|---|---|---|
| Percent Comonomer | Comonomer | Melt Index | 11 | 12 | 13 |
| 28 | Vinyl acetate | 800 | 15 | - | - |
| 28 | Vinyl acetate | 2500 | 15 | 20 | 18 |
| 35 | Butyl acrylate | 325 | - | 10 | - |
| 33 | Vinyl acetate | 400 | - | - | 12 |

**Table 4**

| Sample | | | |
|---|---|---|---|
| | 11 | 12 | 13 |
| Viscosity@93°C (mPa.s) (200°F(cps)) | 1180 | 1250 | 1390 |
| Adhesion to paper board | full | full | full |
| Application temperature | 93°C (200°F) | 93°C (200°F) | 93°C (200°F) |
| Heat stress | 43°C (110°F) | 46°C (115°F) | 43°C (110°F) |
| **delta** | **50°C (90°F)** | **50°C (90°F)** | **50°C (85°F)** |

### Example 4 (comparative)

**Table 5 compares formulations that are outside the scope of the invention and which are representative of current technology. All of these commercially available products have delta values significantly greater than 56°C (100°F).**

| | | Viscosity | Application Temperature | Heat Resistance | **Delta** |
|---|---|---|---|---|---|
| 7500 | H.B. Fuller | 962mPa.s(cps)@ 177°C(350°F) | 177°C(350°F) | 43°C(110°F) | **133°C(240°F)** |
| HL-7255 | H.B. Fuller | 900mPa.s(cps)@ 177°C(350°F) | 177°C(350°F) | 46°C(115°F) | **130°C(235°F)** |
| HL-9200 | H.B. Fuller | 1140mPa.s(cps)@ 135°C(275°F) | 135°C(275°F) | 43°C(110°F) | **92°C(165°F)** |
| 80-8448 | Henkel | 1180mPa.s(cps)@ 177°C(350°F) | 177°C(350°F) | 54°C(130°F) | **122°C(220°F)** |
| VS 763 | Henkel | 1200mPa.s(cps)@ 135°C(275°F) | 135°C(275°F) | 38°C(100°F) | **97°C(175°F)** |
| 84119 | Swift | 1088mPa.s(cps)@ 177°C(350°F) | 177°C(350°F) | 49°C(120°F) | **128°C(230°F**) |
| 65312 | Swift | 825mPa.s(cps)@ 121°C(250°F) | 121°C(250°F) | 41°C(105°F) | **81°C(145°F)** |
| 34-250A | National Starch and Chemical Co. | 1100mPa.s(cps)@ 121°C(250°F) | 121°C(250°F) | 43°C(110°F) | **78°C(140°F)** |
| 34-274A | National Starch and Chemical Co. | 1200mPa.s(cps)@ 121°C(250°F) | 121°C(250°F) | 54°C(130°F) | **67°C(120°F)** |
| 34-2125 | National Starch and Chemical Co. | 1205mPa.s(cps)@ 121°C(250°F) | 121°C(250°F) | 52°C(125°F) | **69°C(125°F)** |

The specific embodiments described herein are offered by way of example only, and the invention is to be limited only by the terms of the appended claims.

## Claims

1. A low application temperature hot melt adhesive that is applied at or below 149°C (300°F) and wherein the bonded adhesive heat resistance and the adhesive application temperature are separated by 56°C (100°F) or less and wherein the adhesive application temperature means the temperature, to nearest 13.9 °C (25 °F) increment, that the adhesive viscosity falls between 800 to 1500 mPas (cps), wherein the low application temperature hot melt adhesive comprises at least one ethylene polymer and at least one tackifying resin selected from the group consisting of natural rosin, modified rosin, synthetic hydrocarbon resin and/or alkyl phenolic tackifier.

2. The adhesive of claim 1, wherein the at least one ethylene polymer is ethylene n-butyl acrylate, ethylene vinyl acetate or a mixture thereof.

3. The adhesive of claim 1 or 2, wherein the at least one tackifying resin is a synthetic hydrocarbon resin.

4. The adhesive of claims 1 to 3, wherein the adhesive contains further additives such as waxes, antioxidants and/or stabilizers.

5. The adhesive of claims 1 to 4 applied at or below 121°C (250°F) and wherein the bonded adhesive heat resistance and the adhesive application temperature are separated by 56°C (100°F) or less.

6. The adhesive of claim 5 applied at or below 93°C (200°F) and wherein the bonded adhesive heat resistance and the adhesive application temperature are separated by 56°C (100°F) or less.

7. The adhesive of claims 1 to 6 further comprising an energy absorbing ingredient having an absorption in the range from 750 to 5000 nm.

8. The adhesive of claims 1 to 7 further comprising a fragrance.

9. An article of manufacture comprising the adhesive of claims 1 to 8.

10. The article of claim 9 wherein crystallization of the adhesive when analyzed by differential scanning calorimeter from application temperature to room temperature at a cooling rate of 150°C/min yields a time between initial cooling and crystallization of 0.35 minutes or greater and which is thermally stable at application temperature for a period of seventy two hours as indicated by a viscosity change within plus/minus ten percent of the original application viscosity.

11. The article of claim 9 which is a carton, case, tray, bag or book.

12. Use of an article according to claim 11 for packaging food or an alcoholic beverage.

13. Use of the hot melt adhesive of claims 1 to 8 for bonding a substrate to a similar or dissimilar substrate.

14. Use of the hot melt adhesive of claims 1 to 8 to seal and/or form a case, carton, tray, bag or book.

15. A method of manufacturing the adhesive of claims 1 to 8, said method comprising heating adhesive components at a temperature below 121°C (250°F) to form a homogenous adhesive blend.

16. The method of claim 15 whereby heating is achieved using low pressure steam at less than 1.72 bar (25 psi) or hot water.

17. The method of claim 15 utilizing a heated insulated bulk container (IBC) or other transit container as the primary vessel for mixing, storage, distribution and/or delivery.

18. A method of claim 15 wherein a continuous flow mixing process is used to obtain said homogeneous blend.

19. A method of claim 15 wherein the adhesive components are molten, pre-melted materials.

## Patentansprüche

1. Heißschmelzklebstoff mit niedriger Anwendungstemperatur, der bei oder unter 149 °C (300 °F) angewendet wird und wobei die Wärmebeständigkeit des verklebten Klebstoffes und die Klebstoffanwendungstemperatur um 56 °C (100 °F) oder weniger voneinander getrennt sind und wobei die Klebstoffanwendungstemperatur die Temperatur bezeichnet, um die die Klebstoff-Viskosität zwischen 800 und 1500 mPas (cP) fällt, auf den nächsten Zuwachs von 13,9 °C (25 °F), wobei der Heißschmelzklebstoff mit niedriger Anwendungstemperatur mindestens ein Ethylenpolymer und mindestens ein Klebrigharz umfasst, ausgewählt aus der Gruppe bestehend aus natürlichem Kolophonium, modifiziertem Kolophonium, synthetischem Kohlenwasserstoffharz und/oder Alkylphenolklebrigmacher.

2. Klebstoff nach Anspruch 1, wobei das mindestens eine Ethylenpolymer Ethylen-n-butylacrylat, Ethylenvinylacetat oder eine Mischung davon ist.

3. Klebstoff nach Anspruch 1 oder 2, wobei das mindestens eine Klebrigharz ein synthetisches Kohlenwasserstoffharz ist.

4. Klebstoff nach Anspruch 1 bis 3, wobei der Klebstoff ferner Zusätze wie Wachse, Antioxidantien und/oder Stabilisatoren enthält.

5. Klebstoff nach Anspruch 1 bis 4, angewendet bei oder unter 121 °C (250 °F) und wobei die Wärmebeständigkeit des verklebten Klebstoffes und die Klebstoffanwendungstemperatur um 56 °C (100 °F) oder weniger voneinander getrennt sind.

6. Klebstoff nach Anspruch 5, angewendet bei oder unter 93 °C (200 °F) und wobei die Wärmebeständigkeit des verklebten Klebstoffes und die Klebstoffanwendungstemperatur um 56 °C (100 °F) oder weniger voneinander getrennt sind.

7. Klebstoff nach Anspruch 1 bis 6, ferner einen Energie aufnehmenden Inhaltsstoff umfassend, der eine Aufnahme im Bereich von 750 bis 5000 nm hat.

8. Klebstoff nach Anspruch 1 bis 7, ferner einen Duftstoff umfassend.

9. Herstellungserzeugnis, den Klebstoff von Anspruch 1 bis 8 umfassend.

10. Erzeugnis nach Anspruch 9, wobei eine Kristallisierung des Klebstoffes, wenn durch ein Differenz-Kalorimeter von Anwendungstemperatur bis Raumtemperatur bei einer Abkühlungsrate von 150 °C/min analysiert, eine Zeit zwischen dem ursprünglichen Abkühlen und der Kristallisierung von 0,35 Minuten oder mehr ergibt, und welcher bei Anwendungstemperatur über einen Zeitraum von zweiundsiebzig Stunden, wie angezeigt durch eine Viskositätsveränderung im Rahmen von plus/minus zehn Prozent der Ausgangsviskositätsanwendung, wärmebeständig ist.

11. Erzeugnis nach Anspruch 9, das ein Karton, eine Kiste, eine Schale, ein Beutel oder ein Buch ist.

12. Verwendung eines Erzeugnisses nach Anspruch 11 zum Verpacken von Lebensmitteln oder einem Alkoholgetränk.

13. Verwendung des Heißschmelzklebstoffes nach Anspruch 1 bis 8 zum Verkleben eines Substrats mit einem ähnlichen oder unterschiedlichen Substrat.

14. Verwendung des Heißschmelzklebstoffes nach Anspruch 1 bis 8 zum Verschließen und/oder Ausbilden einer Kiste, eines Kartons, einer Schale, eines Beutels oder eines Buchs.

15. Herstellungsverfahren des Klebstoffes nach Anspruch 1 bis 8, wobei das Verfahren das Erwärmen der Klebstoffkomponenten bei einer Temperatur unter 121 °C (250 °F) umfasst, um eine homogene Klebstoffmischung auszubilden.

16. Verfahren nach Anspruch 15, wobei das Erwärmen durch das Verwenden von Niederdruckdampf mit weniger als 1,72 bar (25 psi) oder heißem Wasser erreicht wird.

17. Verfahren nach Anspruch 15, das einen beheizten, isolierten Schüttgutcontainer (insulated bulk container - IBC) oder einen anderen Transitcontainer als den primären Behälter zum Mischen, Aufbewahren, Verteilen und/oder Ausliefern benutzt.

18. Verfahren nach Anspruch 15, wobei ein kontinuierlicher Mischvorgang verwendet wird, um die homogene Mischung zu erhalten.

19. Verfahren nach Anspruch 15, wobei die Klebstoffkomponenten geschmolzene, vorgeschmolzene Materialien sind.

## Revendications

1. Adhésif à haut point de fusion et basse température d'application qui est appliqué à maximum 149°C (300°F) et, la résistance à la chaleur de l'adhésif lié et la température d'application de l'adhésif étant séparées de maximum 56°C (100°F) et la température d'application de l'adhésif désignant la température, à 13,9°C (25°F) près, où la viscosité de l'adhésif tombe entre 800 et 1500 mPa.s (cps), où l'adhésif à haut point de fusion et basse température d'application comprend au moins un polymère d'éthylène et au moins une résine épaississante choisie dans le groupe constitué de la colophane naturelle, de la colophane modifiée, d'une résine hydrocarbure synthétique et/ou d'un épaississant alkylphénolique.

2. Adhésif selon la revendication 1, dans lequel l'au moins un polymère d'éthylène est un éthylène acrylate de n-butyle, éthylène acétate de vinyle, ou un mélange de ceux-ci.

3. Adhésif selon la revendication 1 ou 2, dans lequel l'au moins une résine épaississante est une résine hydrocarbure synthétique.

4. Adhésif selon les revendications 1 à 3, l'adhésif contenant en outre des additifs tels que des cires, des antioxydants et/ou des stabilisants.

5. Adhésif selon les revendications 1 à 4 appliqué à maximum 121°C (250°F) et où la résistance à la chaleur de l'adhésif lié et la température d'application de l'adhésif sont séparées de maximum 56°C (100°F).

6. Adhésif selon la revendication 5 appliqué à maximum 93°C (200°F) et où la résistance à la chaleur de l'adhésif lié et la température d'application de l'adhésif sont séparées de maximum 56°C (100°F).

7. Adhésif selon les revendications 1 à 6, contenant en outre un ingrédient absorbeur d'énergie ayant une absorption dans la gamme entre 750 et 5000 nm.

8. Adhésif selon les revendications 1 à 7 contenant en outre un parfum.

9. Article manufacturé contenant un adhésif selon les revendications 1 à 8.

10. Article selon la revendication 9, où la cristallisation de l'adhésif, quand on l'analyse par un calorimètre à balayage différentiel de la température d'application à la température ambiante à un taux de refroidissement de 150°C/min donne une durée entre le refroidissement initial et la cristallisation d'au moins 0,35 minutes, et qui est thermiquement stable à la température d'application sur une période de 72 heures comme indiqué par un changement de viscosité de ± 10 % de la viscosité d'application d'origine.

11. Article selon la revendication 9 qui est un carton, une boîte, un plateau, un sac ou un livre.

12. Utilisation d'un article selon la revendication 11 pour emballer de la nourriture ou une boisson alcoolique.

13. Utilisation de l'adhésif thermofusible des revendications 1 à 8 pour lier un substrat à un substrat similaire ou dissemblable.

14. Utilisation de l'adhésif thermofusible des revendications 1 à 8 pour sceller et/ou former un carton, une boîte, un plateau, un sac ou un livre.

15. Procédé de fabrication d'un adhésif selon les revendications 1 à 8, ledit procédé comprenant de chauffer des composants d'adhésif à une température inférieure à 121°C (250°F) pour former un mélange adhésif homogène.

16. Procédé selon la revendication 15 où le chauffage est effectué en utilisant de la vapeur à basse pression à moins de 1,72 bar (25 psi) ou de l'eau chaude.

17. Procédé selon la revendication 15 utilisant un conteneur en vrac isolé (IBC) chauffé ou tout autre conteneur de transit comme récipient primaire pour le mélange, le stockage, la distribution et/ou la livraison.

18. Procédé selon la revendication 15, dans lequel on utilise un procédé en flux continu pour obtenir ledit mélange homogène.

19. Procédé selon la revendication 15, dans lequel les composants adhésifs sont des matériaux fondus, pré-fondus.
